# EUROPÄISCHE PATENTSCHRIFT

(11) **EP 0 937 732 B1**
(45) Veröffentlichungstag und Bekanntmachung des Hinweises auf die Patenterteilung: **23.04.2003**
(21) Anmeldenummer: 98120919.0
(22) Anmeldetag: 04.11.1998
(51) Int. Cl.: C07F 7/18

(54) **Verfahren zur Reduzierung der Sulfankettenlänge von Bis(silylorganyl)polysulfanen**
Process for reducing the sulfane-chain length of bis(organosilyl)polysulfanes
Procédé pour la réduction de la longueur de chaîne sulfane de composés bis(organylsilyl)polysulfanes

(30) Priorität: 14.11.1997 DE 19750503
(43) Veröffentlichungstag der Anmeldung: 25.08.1999
(73) Patentinhaber: Degussa AG, 40474 Düsseldorf (DE)
(72) Erfinder: Michel, Rudolf, 63579 Freigericht (DE); Münzenberg, Jörg, 63457 Hanau (DE)

(56) Entgegenhaltungen:
- EP-A- 0 773 224
- EP-A- 0 908 463

## Beschreibung

Die Erfindung betrifft ein Verfahren zur Reduzierung der Sulfankettenlänge von Bis-(silylorganyl)polysulfanen durch Umsetzung dieser Verbindungen mit einem Sulfid und einem Halogenalkylsilan.

Polysulfane dieses Typs sind seit langem bekannt (DE-PS 2255577) und werden in großem Umfang als Verstärkungsadditive in kieselsäurehaltigen Kautschukvulkanisaten, insbesondere auf dem Reifensektor eingesetzt. Dabei hat sich vor allem das Bis(triethoxisilylpropyl)tetrasulfan (Si 69, Degussa AG) durchgesetzt (*s. Wolff, 129th Meeting of the Rubber Division American Chemical Society, April 8-11, 1986, NY).*

Aus EP 0 908 463 ist ein Verfahren bekannt, wobei Polysulfidsilane der Formel

(RO)₃SiC₃H₆SₓC₃H₆Si (OR)₃

mit mindestens einer wasserfreien Schwefelverbindung M₂S oder MS und einem Halogenalkoxysilan der Formel

XC₃H₆Si(OR)₃

zu einem Polysulfidsilan der Formel

(RO)₃SiC₃H₆S_{y}C₃H₆Si(OR)₃,

mit x > y, umgesetzt wird.

In der letzten Zeit wurde verschiedentlich die Vorteile bei der Verarbeitung entsprechender Disulfane beschrieben. Diese sollten als möglichst reine Verbindungen gemäß EP-A-0732 362 (US-PS 5,580,919) oder aber auch in Form von Gemischen in die Kautschukmischungen eingearbeitet werden (DE-OS 197 0246.1).

Die Herstellung der Disulfane läuft nach dem Stand der Technik jedoch unter unangenehmen Bedingungen ab, da man Mercaptosilane mit Mangandioxid oxidieren muß (EP-A 0718 302).

Aufgabe der Erfindung ist es, ein Verfahren zur Verfügung zu stellen, das ohne diese Begleiterscheinungen zum gewünschten Produkt führt.

Gegenstand der Erfindung ist ein Verfahren zur Reduzierung der Sulfankettenlänge von Bis-(silylorganyl)polysulfanen, dadurch gekennzeichnet,
daß man eine Organosiliciumverbindung der allgemeinen Formel

Z-Alk-Sₓ-Alk-Z (I)

in der Z für Gruppierungen 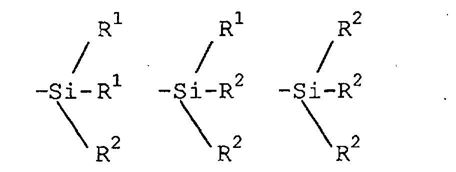 steht, in denen R¹eine lineare oder verzweigte Alkylgruppe mit 1 bis 5 C-Atomen, einen Cycloalkylrest mit 5 bis 8 C-Atomen, den Benzylrest oder den gegebenfalls durch Methyl, Ethyl oder Chlor substituierten Phenylrest darstellt,
R² für eine Alkoxigruppe mit linearer oder verzweigter Kohlenstoffkette mit 1 bis 5 C-Atomen oder für eine Cycloalkoxigruppe mit 5 bis 8 C-Atomen, die Phenoxigruppe oder die Benzylgruppe steht, wobei R¹ und R² jeweils gleiche oder verschiedene Bedeutungen haben können, Alk beschreibt einen zweiwertigen gesättigten oder ungesättigten linearen oder verzweigten Kohlenwasserstoffrest mit 1-10 C-Atomen insbesondere 1 bis 4 C-Atomen oder die Gruppe 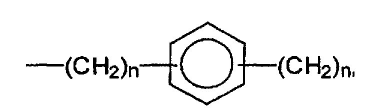 ausgenommen einen zweiwertigen gesättigten Kohlenwasserstoffrest mit 3 C-Atomen,
x für eine ganze Zahl von 3 bis 8, insbesondere 4 bis 6 und n für eine ganze Zahl von 1 bis 4 steht, mit einem wasserfreien Sulfid der allgemeinen Formel

Me₂S (II),

in der Me ein Alkalimetall, insbesondere Natrium oder ein Äquivalent eines Erdalkalimetallatoms oder des Zinks oder Ammonium darstellt, und einer Organosiliciumverbindung der allgemeinen Formel

Z-Alk-Y (III)

in der Z und Alk die obengenannten Bedeutungen besitzen und Y: Cl, Br bedeutet,
umsetzt, wobei man das Molverhältnis des Polysulfans und des Me₂S entsprechend dem gewünschten Schwefelgehalt des teilweise zu desulfurierenden Polysulfans wählt.

In einer besonderen Ausführungsform steht x für einen statistischen Mittelwert, da das entsprechende reine Polysulfan oft nur schwer herstellbar ist.

Durch eine geeignete Einstellung der Molverhältnisse gelingt es, Gemische verschiedener Polysulfane herzustellen, bei denen z. B. der Schwerpunkt bei den Disulfanen liegt (DE-OS 19702046), oder auch sehr reine Disulfane, wie sie gemäß US-PS 5,580,919 eingesetzt werden.

Man wählt die Reaktionsverhältnisse im allgemeinen so, daß man der Reaktionsmischung die Verbindung gemäß Formel (II) in einer Menge (Mol) zusetzt, die mindestens ausreicht, mit den durch den Schwefelanteil aus der Desulfurierung und den Na₂S-Zusatz neu entstandenen S_{y}-Gruppen zu Verbindungen der Formel (I) abzureagieren, wobei y <x ≥ 1 der Länge der durch die Desulfurierung entstandenen Sulfankette entspricht.

Die Umsetzung findet bevorzugt in einem organischen, unter den Versuchsbedingungen inerten, bevorzugt polaren Lösungsmittel statt. Dazu gehören insbesondere aliphatische Alkohole mit 1 bis 6 C-Atomen, Ether mit C₂-C₁₂-C-Atomen, Amide, wie z. B. Dimethylformamid, Sulfoxide, wie z. B. Dimethylsulfoxid.

Die Reaktion läuft im allgemeinen bei Temperaturen von 50 ° C bis Rückflußtemperatur des eingesetzten Lösungsmittels statt, gegebenenfalls unter dem sich bei dieser Temperatur einstellenden Druck.
Das erhaltene Produkt weist insbesondere eine Kettenlänge S_{y} mit y = 2 auf.

Bevorzugt setzt man ein Tetrasulfan ein, um die Sulfankettenlänge zu kürzen.
Dies gilt insbesondere für das leicht verfügbare Bis(triethoxysilylpropyl)tetrasulfan.
Aus einem Tetrasulfan stellt man das entsprechende Trisulfan her, indem man die Molverhältnisse der
Reaktanden Tetrasulfan, Me₂S und Verbindungen der Formel (II) auf 1 : 0,4 bis 0,6 : 0,9 bis 1,1 einstellt.

Für die Herstellung des Disulfans aus dem Tetrasulfan benötigt man Verhältnisse von 1 : 1,8 bis 2,2 : 2,5 bis 3,5.

Bevorzugt setzt man Verbindungen gemäß Formel (II) ein, die zu einem symmetrischen Polysulfanmolekül führen.

Ein weiterer Gegenstand der Erfindung ist ein Verfahren zur Reduzierung der Sulfankettenlänge von Bis-(silylorganyl)tetrasulfan, welches dadurch gekennzeichnet ist, daß man eine Organosiliciumverbindung der allgemeinen Formel

Z-Alk-Sₓ-Alk-Z (I)

in der Z für Gruppierungen 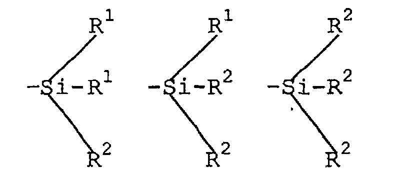 steht, in denen R¹eine lineare oder verzweigte Alkylgruppe mit 1 bis 5 C-Atomen, einen Cycloalkylrest mit 5 bis 8 C-Atomen, den Benzylrest oder den gegebenfalls durch Methyl, Ethyl oder Chlor substituierten Phenylrest darstellt, R² für eine Alkoxigruppe mit linearer oder verzweigter Kohlenstoffkette mit 1 bis 5 C-Atomen oder für eine Cycloalkoxigruppe mit 5 bis 8 C-Atomen, die Phenoxigruppe oder die Benzylgruppe steht, wobei R¹ und R² jeweils gleiche oder verschiedene Bedeutungen haben können, Alk beschreibt einen zweiwertigen gesättigten oder einfach ungesättigten linearen oder verzweigten Kohlenwasserstoffrest mit 1-10 C-Atomen oder die Gruppe 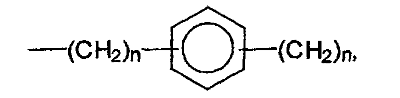 x für 4 und
n für eine ganze Zahl von 1 bis 4 steht,
mit einem wasserfreien Sulfid der allgemeinen Formel

Me₂S (II),

in der Me ein Alkalimetall, insbesondere Natrium oder ein Äquivalent eines Erdalkalimetallatoms oder des Zinks oder Ammonium darstellt, und einer Organosiliciumverbindung der allgemeinen Formel

Z-Alk-Y (III)

in der Z und Alk die obengenannten Bedeutungen besitzen und Y: Cl, Br bedeutet,
umsetzt, wobei man die Molverhältnisse der Reaktanden Tetrasulfan, Me₂S und Verbindungen gemäß Formel (III) auf 1 : 0,4 bis 0,6 : 0,9 bis 1,1 einstellt, und das desulfurierte Trisulfan gewinnt.

Ein weiterer Gegenstand der Erfindung ist ein Verfahren zur Reduzierung der Sulfankettenlänge von Bis-(silylorganyl)tetrasulfan, welches dadurch gekennzeichnet ist, daß man eine Organosiliciumverbindung der allgemeinen Formel

Z-Alk-Sₓ-Alk-Z (I)

in der Z für Gruppierungen 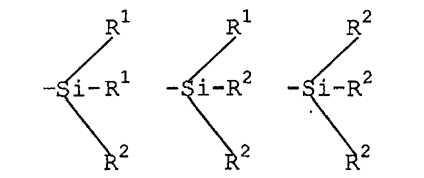 steht, in denen R¹eine lineare oder verzweigte Alkylgruppe mit 1 bis 5 C-Atomen, einen Cycloalkylrest mit 5 bis 8 C-Atomen, den Benzylrest oder den gegebenfalls durch Methyl, Ethyl oder Chlor substituierten Phenylrest darstellt, R² für eine Alkoxigruppe mit linearer oder verzweigter Kohlenstoffkette mit 1 bis 5 C-Atomen oder für eine Cycloalkoxigruppe mit 5 bis 8 C-Atomen, die Phenoxigruppe oder die Benzylgruppe steht, wobei R¹ und R² jeweils gleiche oder verschiedene Bedeutungen haben können,
Alk beschreibt einen zweiwertigen gesättigten oder einfach ungesättigten linearen oder verzweigten Kohlenwasserstoffrest mit 1-10 C-Atomen oder die Gruppe 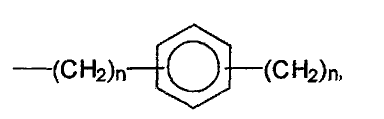 x für 4 und
n für eine ganze Zahl von 1 bis 4 steht,
mit einem wasserfreien Sulfid der allgemeinen Formel

Me₂S (II),

in der Me ein Alkalimetall, insbesondere Natrium oder ein Äquivalent eines Erdalkalimetallatoms oder des Zinks oder Ammonium darstellt, und einer Organosiliciumverbindung der allgemeinen Formel

Z-Alk-Y (III)

in der Z und Alk die obengenannten Bedeutungen besitzen und
Y: Cl, Br bedeutet,
umsetzt, wobei man die Molverhältnisse der Reaktanden Tetrasulfan, Me₂S und Verbindungen gemäß Formel (III) auf 1 : 1,8 bis 2,2 ; 2,5 bis 3,5 einstellt, und das desulfurierte Disulfan gewinnt.

### Beispiele

### Beispiel 1: Reduzierung der mittleren Kettenlänge von 4 auf 2

In einem 500 ml Dreihalskolben mit Rückflußkühler und Magnetrührer wurden unter N₂-Schutzgas 67,4 g (0,13 mol) Bis(3-triethoxysilylpropyl)tetrasulfan und 15,5 g (0,24 mol) Natriumsulfid in 120 ml Ethanol vorgelegt. Dazu wurden bei Raumtemperatur 108,7 g (0,45 mol) 3-Chlorpropyltriethoxysilan gegeben und das Reaktionsgemisch 2,5 h bei Rückflußtemperatur gehalten. Nach Abkühlen auf Raumtemperatur wurde vom Niederschlag abfiltriert und der Filtrierrückstand 3 mal mit 30 ml Ethanol gewaschen. Die gesammelten Filtrate wurden im Rotationsverdampfer bei 100 ° C bis zu einem Endvakuum von 40 mbar eingeengt. Man erhielt 153,1 g einer gelben Flüssigkeit, die nach ¹H-NMRspektroskopischer Analyse einem Polysulfangemisch mit einer mittleren Polysulfankettenlänge von 2 entspricht. Ausbeute: 90 %.

### Beispiel 2: Reduzierung der mittleren Kettenlänge von 4 auf 3

In einem 500 ml Dreihalskolben mit Rückflußkühler (Tropfkühler) und Magnetrührer wurden unter N₂-Schutzgas 100 g (0,19 mol) Bis(3-triethoxysilylpropyl)tetrasulfan und 7,8 g (0,1 mol) Natriumsulfid in 100 ml Ethanol vorgelegt und 1 h auf Rückfluß erhitzt. Dazu wurden 48,2 g (0,2 mol) 3-Chlorpropyltriethoxysilan gegeben und das Reaktionsgemisch weitere 2,5 h bei Rückflußtemperatur gehalten. Nach Abkühlen auf Raumtemperatur wurde vom Niederschlag abfiltriert und der Filtrierrückstand 3 mal mit 30 ml Ethanol gewaschen. Die gesammelten Filtrate wurden im Rotationsverdampfer bei 110 ° C bis zu einem Endvakuum von 40 mbar eingeengt. Man erhielt 144,9 g einer rotbraunen Flüssigkeit, die nach ¹H-NMR-spektroskopischer Analyse einem Polysulfangemisch mit einer mittleren Polysulfankettenlänge von 3 entspricht.
Ausbeute: 98 %.

## Patentansprüche

1. Verfahren zur Reduzierung der Sulfankettenlänge von Bis-(silylorganyl)polysulfanen,
**dadurch gekennzeichnet,**
**daß** man eine Organosiliciumverbindung der allgemeinen Formel
Z-Alk-Sₓ-Alk-Z (I)
in der Z für Gruppierungen 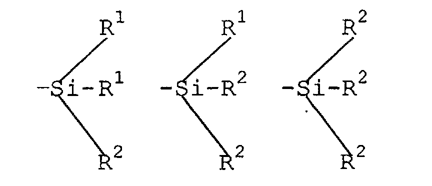 steht, in denen R¹eine lineare oder verzweigte Alkylgruppe mit 1 bis 5 C-Atomen, einen Cycloalkylrest mit 5 bis 8 C-Atomen, den Benzylrest oder den gegebenfalls durch Methyl, Ethyl oder Chlor substituierten Phenylrest darstellt,
R² für eine Alkoxigruppe mit linearer oder verzweigter Kohlenstoffkette mit 1 bis 5 C-Atomen oder für eine Cycloalkoxigruppe mit 5 bis 8 C-Atomen, die Phenoxigruppe oder die Benzylgruppe steht, wobei R¹ und R² jeweils gleiche oder verschiedene Bedeutungen haben können,
Alk beschreibt einen zweiwertigen gesättigten oder einfach ungesättigten linearen oder verzweigten Kohlenwasser-stoffrest mit 1-10 C-Atomen oder die Gruppe 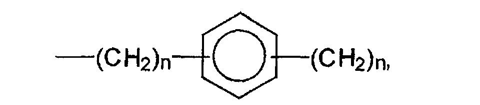 ausgenommen einen zweiwertigen gesättigten
Kohlenwasserstoffrest mit 3 C-Atomen,
x für eine ganze Zahl von 3 bis 8, insbesondere 4 bis 6 und
n für eine ganze Zahl von 1 bis 4 steht,
mit einem wasserfreien Sulfid der allgemeinen Formel
Me₂S (II),
in der Me ein Alkalimetall, insbesondere Natrium oder ein Äquivalent eines Erdalkalimetallatoms oder des Zinks oder Ammonium darstellt, und einer
Organosiliciumverbindung der allgemeinen Formel
Z-Alk-Y (III)
in der Z und Alk die obengenannten Bedeutungen besitzen und
Y: Cl, Br bedeutet,
umsetzt, wobei man das Molverhältnis des Polysulfans und des Me₂S entsprechend dem gewünschten Schwefelgehalt des teilweise zu desulfurierenden Polysulfans und des gewünschten Produkts wählt, und das desulfurierte Polysulfan rein oder in Form eines Gemisches mit anderen Polysulfanen gewinnt.

2. Verfahren gemäß Anspruch 1,
**dadurch gekennzeichnet,**
**daß** man der Reaktionsmischung die Verbindung gemäß Formel (II) in einer Menge (Mol) zusetzt, die mindestens ausreicht, mit den durch den Schwefelanteil aus der Desulfurierung und den Na₂S-Zusatz neu entstandenen S_{y}-Gruppen zu Verbindungen der Formel (I) abzureagieren, wobei y <x ≥1 der Länge der durch die Desulfurierung entstandenen Sulfankette entspricht.

3. Verfahren gemäß den Ansprüchen 1 oder 2,
**dadurch gekennzeichnet,**
**daß** man in einem organischen, inerten und bevorzugt polaren Lösungsmittel arbeitet.

4. Verfahren gemäß Anspruch 3,
**dadurch gekennzeichnet,**
**daß** man die Reaktion bei einer Temperatur von 50 ° C bis Rückflußtemperatur des Lösungsmittels durchführt.

5. Verfahren gemäß den Ansprüche 1 bis 4,
**dadurch gekennzeichnet,**
**daß** x in der Formel (I)und entsprechend y einem statistischen Mittelwert entsprechen.

6. Verfahren gemäß den Ansprüche 1 bis 5,
**dadurch gekennzeichnet,**
**daß** man ein Bis-(silylorganyl)tetrasulfan desulfuriert.

7. Verfahren zur Reduzierung der Sulfankettenlänge von Bis-(silylorganyl)tetrasulfan,
**dadurch gekennzeichnet,**
**daß** man eine Organosiliciumverbindung der allgemeinen Formel
Z-Alk-Sₓ-Alk-Z (I)
in der Z für Gruppierungen 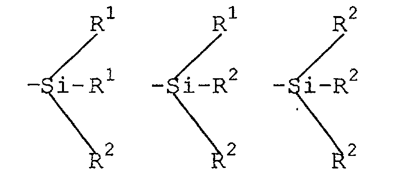 steht, in denen R¹eine lineare oder verzweigte Alkylgruppe mit 1 bis 5 C-Atomen, einen Cycloalkylrest mit 5 bis 8 C-Atomen, den Benzylrest oder den gegebenfalls durch Methyl, Ethyl oder Chlor substituierten Phenylrest darstellt,
R² für eine Alkoxigruppe mit linearer oder verzweigter Kohlenstoffkette mit 1 bis 5 C-Atomen oder für eine Cycloalkoxigruppe mit 5 bis 8 C-Atomen, die Phenoxigruppe oder die Benzylgruppe steht, wobei R¹ und R² jeweils gleiche oder verschiedene Bedeutungen haben können,
Alk beschreibt einen zweiwertigen gesättigten oder einfach ungesättigten linearen oder verzweigten Kohlenwasser-stoffrest mit 1-10 C-Atomen oder die Gruppe 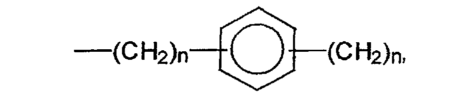 x für 4 und
n für eine ganze Zahl von 1 bis 4 steht,
mit einem wasserfreien Sulfid der allgemeinen Formel
Me₂S (II),
in der Me ein Alkalimetall, insbesondere Natrium oder ein Äquivalent eines Erdalkalimetallatoms oder des Zinks oder Ammonium darstellt, und einer Organosiliciumverbindung der allgemeinen Formel
Z-Alk-Y (III)
in der Z und Alk die obengenannten Bedeutungen besitzen und
Y: Cl, Br bedeutet,
umsetzt, wobei man die Molverhältnisse der Reaktanden Tetrasulfan, Me₂S und Verbindungen gemäß Formel (III) auf 1 : 0,4 bis 0,6 : 0,9 bis 1,1 einstellt, und das desulfurierte Trisulfan gewinnt.

8. Verfahren zur Reduzierung der Sulfankettenlänge von Bis-(silylorganyl)tetrasulfan,
**dadurch gekennzeichnet,**
**daß** man eine Organosiliciumverbindung der allgemeinen Formel
Z-Alk-Sₓ-Alk-Z (I)
in der Z für Gruppierungen 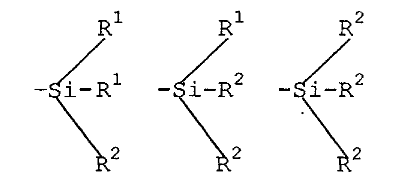 steht, in denen R¹eine lineare oder verzweigte Alkylgruppe mit 1 bis 5 C-Atomen, einen Cycloalkylrest mit 5 bis 8 C-Atomen, den Benzylrest oder den gegebenfalls durch Methyl, Ethyl oder Chlor substituierten Phenylrest darstellt,
R² für eine Alkoxigruppe mit linearer oder verzweigter Kohlenstoffkette mit 1 bis 5 C-Atomen oder für eine Cycloalkoxigruppe mit 5 bis 8 C-Atomen, die Phenoxigruppe oder die Benzylgruppe steht, wobei R¹ und R² jeweils gleiche oder verschiedene Bedeutungen haben können,
Alk beschreibt einen zweiwertigen gesättigten oder einfach ungesättigten linearen oder verzweigten Kohlenwasser-stoffrest mit 1-10 C-Atomen oder die Gruppe 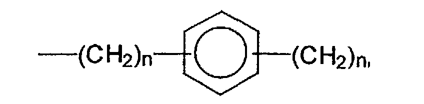 x für 4 und
n für eine ganze Zahl von 1 bis 4 steht,
mit einem wasserfreien Sulfid der allgemeinen Formel
Me₂S (II),
in der Me ein Alkalimetall, insbesondere Natrium oder ein Äquivalent eines Erdalkalimetallatoms oder des Zinks oder Ammonium darstellt, und einer Organosiliciumverbindung der allgemeinen Formel
Z-Alk-Y (III)
in der Z und Alk die obengenannten Bedeutungen besitzen und
Y: Cl, Br bedeutet,
umsetzt, wobei man die Molverhältnisse der Reaktanden Tetrasulfan, Me₂S und Verbindungen gemäß Formel (III) auf 1 : 1,8 bis 2,2 : 2,5 bis 3,5 einstellt, und das desulfurierte Disulfan gewinnt.

## Claims

1. A process for reducing the sulfane chain length of bis (silylorganyl)polysulfanes,
**characterised in that**
an organosilicon compound of the general formula
Z-Alk-Sₓ-Alk-Z (I)
in which Z denotes groupings 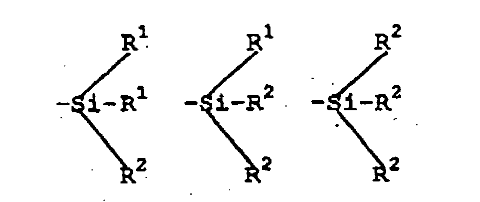 in which R¹ represents a linear or branched alkyl group having 1 to 5 C atoms, a cycloalkyl residue having 5 to 8 C atoms, the benzyl residue or the phenyl residue optionally substituted by methyl, ethyl or chlorine,
R² denotes an alkoxy group having a linear or branched carbon chain having 1 to 5 C atoms or a cycloalkoxy group having 5 to 8 C atoms, the phenoxy group or the benzyl group, wherein R¹ and R² may each have identical or different meanings,
Alk describes a divalent saturated or monounsaturated linear or branched hydrocarbon residue having 1-10 C atoms or the group 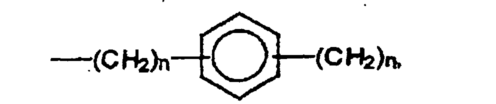 with the exception of a divalent, saturated hydrocarbon residue having 3 C atoms,
x denotes an integer from 3 to 8, in particular from 4 to 6 and
n denotes an integer from 1 to 4
is reacted with an anhydrous sulfide of the general formula
Me₂S (II),
in which Me represents an alkali metal, in particular sodium or an equivalent of an alkaline earth metal atom or of zinc or ammonium, and an organosilicon compound of the general formula
Z-Alk-Y (III)
in which Z and Alk have the above-stated meanings and Y means Cl, Br,
wherein the molar ratio of the polysulfane and of the Me₂S is selected in accordance with the desired sulfur content of the polysulfane to be partially desulfurised and of the desired product, and the desulfurised polysulfane is obtained pure or in the form of a mixture with other polysulfanes.

2. A process according to claim 1,
**characterised in that**
the compound of the formula (II) is added to the reaction solution in a quantity (mol) which is at least sufficient completely to react with the S_{y} groups newly formed by the sulfur fraction from the desulfurisation and the added Na₂S to yield compounds of the formula (I), wherein y < x ≥ 1 corresponds to the length of the sulfane chain formed by the desulfurisation.

3. A process according to claims 1 or 2,
**characterised in that**
an organic, inert and preferably polar solvent is used.

4. A process according to claim 3,
**characterised in that**
the reaction is performed at a temperature of 50°C up to the reflux temperature of the solvent.

5. A process according to claims 1 to 4,
**characterised in that**
x in the formula (I) and correspondingly y correspond to a statistical mean.

6. A process according to claims 1 to 5,
**characterised in that**
a bis(silylorganyl)tetrasulfane is desulfurised.

7. A process for reducing the sulfane chain length of bis(silylorganyl)tetrasulfane,
**characterised in that**
an organosilicon compound of the general formula
Z-Alk-Sₓ-Alk-Z (I)
in which Z denotes groupings 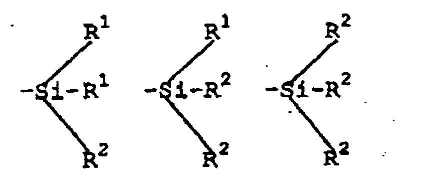 in which R¹ represents a linear or branched alkyl group having 1 to 5 C atoms, a cycloalkyl residue having 5 to 8 C atoms, the benzyl residue or the phenyl residue optionally substituted by methyl, ethyl or chlorine,
R² denotes an alkoxy group having a linear or branched carbon chain having 1 to 5 C atoms or a cycloalkoxy group having 5 to 8 C atoms, the phenoxy group or the benzyl group, wherein R¹ and R² may each have identical or different meanings,
Alk describes a divalent saturated or monounsaturated linear or branched hydrocarbon residue having 1-10 C atoms or the group 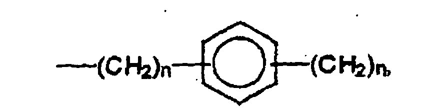 x denotes 4 and
n denotes an integer from 1 to 4
is reacted with an anhydrous sulfide of the general formula
Me₂S (II),
in which Me represents an alkali metal, in particular sodium or an equivalent of an alkaline earth metal atom or of zinc or ammonium, and an organosilicon compound of the general formula
Z-Alk-Y (III)
in which Z and Alk have the above-stated meanings and Y means Cl, Br,
wherein the molar ratios of the reactants tetrasulfane, Me₂S and compounds of the formula (III) are adjusted to 1:0.4 to 0.6:0.9 to 1.1, and the desulfurised trisulfane is obtained.

8. A process for reducing the sulfane chain length of bis(silylorganyl)tetrasulfane,
**characterised in that**
an organosilicon compound of the general formula
Z-Alk-Sₓ-Alk-Z (I)
in which Z denotes groupings 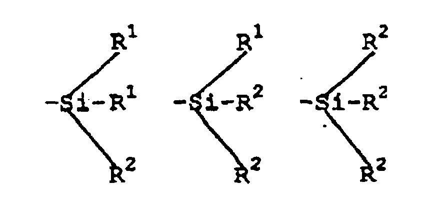 in which R¹ represents a linear or branched alkyl group having 1 to 5 C atoms, a cycloalkyl residue having 5 to 8 C atoms, the benzyl residue or the phenyl residue optionally substituted by methyl, ethyl or chlorine,
R² denotes an alkoxy group having a linear or branched carbon chain having 1 to 5 C atoms or a cycloalkoxy group having 5 to 8 C atoms, the phenoxy group or the benzyl group, wherein R¹ and R² may each have identical or different meanings,
Alk describes a divalent saturated or monounsaturated linear or branched hydrocarbon residue having 1-10 C atoms or the group 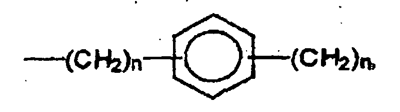 x denotes 4 and
n denotes an integer from 1 to 4
is reacted with an anhydrous sulfide of the general formula
Me₂S (II),
in which Me represents an alkali metal, in particular sodium or an equivalent of an alkaline earth metal atom or of zinc or ammonium, and an organosilicon compound of the general formula
Z-Alk-Y (III)
in which Z and Alk have the above-stated meanings and Y means Cl, Br,
wherein the molar ratios of the reactants tetrasulfane, Me₂S and compounds of the formula (III) are adjusted to 1:1.8 to 2.2:2.5 to 3.5, and the desulfurised disulfane is obtained.

## Revendications

1. Procédé de réduction de la longueur de chaîne sulfane des bis(silyl organyl)polysulfanes.
**caractérisé en ce qu'**
on fait réagir un composé d'organo-silicium de formule générale
Z-Alc-Sₓ-Alc-Z (I)
dans laquelle Z représente les groupements 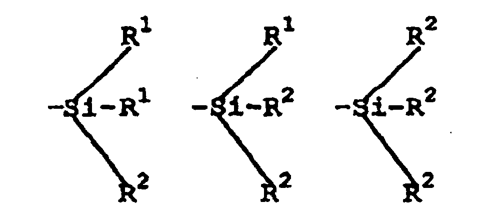 dans lesquels R¹ représente un groupe alkyle linéaire ou ramifié comportant de 1 à 5 atomes de carbone, un radical cycloalkyle comportant de 5 à 8 atomes de carbone, le radical benzyle ou le radical phényle éventuellement substitué par un méthyle, un éthyle ou un chlore,
R² représente un groupe Alcoxy à chaîne carbonée linéaire ou ramifiée comportant de 1 à 5 atomes de carbone ou un groupe cycloAIcoxy comportant de 5 à 8 atomes de carbone, le groupe phénoxy ou le groupe benzyle, où R¹ et R² peuvent avoir à chaque fois des significations identiques ou différentes,
Alc représente un radical hydrocarboné bivalent, saturé ou insaturé, linéaire ou ramifié, comportant de 1 à 10 atomes de carbone, ou le groupe 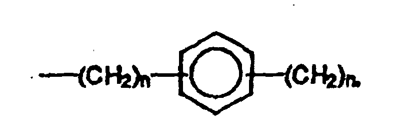 à l'exception d'un radical hydrocarboné sature bivalent comportant 3 atomes de carbone,
x représente un nombre entier allant de 3 à 8, en particulier de 4 à 6 et
n représente un nombre entier allant de 1 à 4, avec un sulfure anhydre de formule générale
Me₂S (II),
dans laquelle Me représente un métal Alcalin, en particulier le sodium ou un équivalent d'un atome de métal Alcalino-terrcux, ou de zinc, ou d'ammonium, et un composé d'organo-silicium de formule générale
Z-Alc-Y (III),
dans laquelle Z et Alc ont les significations Indiquées ci-dessus et Y représente Cl, Br,
où le rapport molaire du polysulfane et du Me₂ est choisi de façon correspondante à la teneur en soufre désirée du polysulfane à désulfurer partiellement et du produit désiré, et l'on obtient le polysulfane désulfuré sous forme pure ou sous forme d'un mélange avec d'autres polysulfanes.

2. Procédé selon la revendication 1,
**caractérisé en ce qu'**
on ajoute au mélange réactionnel le composé selon la formule (II) en une quantité (mole) qui suit au moins pour faire réagir avec les groupes S_{y} nouvellement apparus par la fraction soufre provenant de la désulfuration, et l'addition de Na₂S, pour donner des composés de formule (I) dans lesquels y<x≥1 correspond à la longueur de la chaîne sulfane apparue à la suite de la désulfuration.

3. Procédé selon la revendication 1 ou 2,
**caractérisé en ce qu'**
on travaille dans un solvant organique, inerte et de préférence polaire.

4. Procédé selon la revendication 3,
**caractérisé en ce qu'**
on conduit la réaction à une température allant de 50°C à la température de reflux du solvant.

5. Procédé selon les revendications 1 à 4,
caractértsé en ce que
x dans la formule (I) et de façon correspondante y, correspondent à une moyenne statistique.

6. Procédé selon les revendications 1 à 5,
**caractérisé en ce qu'**
on désulfure un bis(silylorganyl)tétrasulfane.

7. Procédé de réduction de la longueur de chaîne sulfane de bis-(silylorganyl)tétrasulfane,
**caractérisé en ce qu'**
on fait réagir un composé d'organosilicium de formule générale
Z-Alc-Sₓ-Alc-Z (I)
dans laquelle Z représente les groupements 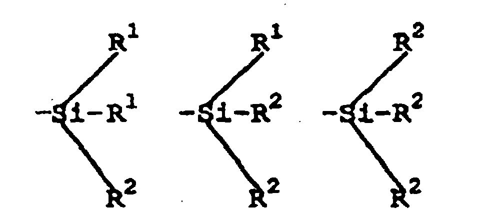 dans lesquels R¹ représente un groupe allyle linéaire ou ramifié comportant de 1 à 5 atomes de carbone, un radical cycloalkyle comportant de 5 à 8 atomes de carbone, le radical benzyle ou le radical phénylc éventuellement substitué par un méthyle, un éthyle ou un chlore,
R² représente un groupe Alcoxy à chaîne carbonée linéaire ou ramifiée comportant de 1 à 5 atomes de carbone ou un groupe cycloAlcoxy comportant de 5 à 8 atomes de carbone, le groupe phénoxy ou le groupe benzyle, où R¹ et R² peuvent avoir à chaque fois des significations identiques ou différentes.
Alc représente un radical hydrocarboné bivalent, saturé ou insaturé, linéaire ou ramifié, comportant de 1 à 10 atomes de carbone, ou le groupe 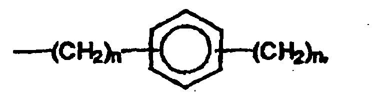 x vaut 4 et
n représente un nombre entier allant de 1 à 4, avec un sulfure anhydre de formule générale
Me₂S (II),
dans laquelle Me représente un métal Alcalin, en particulier le sodium ou un équivalent d'un atome de métal Alcalino-terreux, ou de zinc, ou d'ammonium, et un composé d'organo-silicium de formule générale
Z-Alc-Y (III),
dans laquelle Z et Alc ont les significations indiquées ci-dessus et Y représente Cl, Br, où l'on règle les rapports molaires des réactifs tétrasulfanes. Me₂S et composés selon la formule (III) est choisi entre 1 ;0,4 à 0,6 :0,9 à 1,1, et l'on obtient le trisulfane désulfuré.

8. Procédé de réduction de la longueur de chaîne sulfane de bis-(silylorganyl)tétsasulfane,
**caractérisé en ce qu'**
on fait réagir un composé d'organe-silicium de formule générale
Z-Alc-Sₓ-Alc-Z (I)
dans laquelle Z représente les groupements 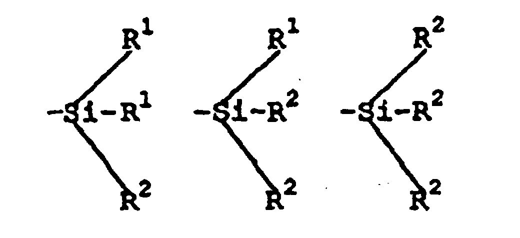 dans lesquels R¹ représente un groupe alkyle linéaire ou ramifié comportant de 1 à 5 atomes de carbone, un radical cycloalkyle comportant de 5 à 8 atomes de carbone, le radical benzyle ou le radical phényle éventuellement substitué par un méthyle, un éthyle ou un chlore,
R² représente un groupe Alcoxy à chaîne carbonée linéaire ou ramifiée comportant de 1 à 5 atomes de carbone ou un groupe cycloAlcoxy comportant de 5 à 8 atomes de carbone, le groupe phénoxy ou le groupe benzyle. où R¹ et R² peuvent avoir à chaque fois des significations identiques ou différentes,
Alc représente un radical hydrocarboné bivalent, saturé ou insaturé, linéaire ou ramifié, comportant de 1 à 10 atomes de carbone, ou le groupe 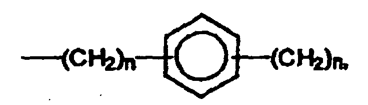 x vaut 4 et
n représente un nombre entier allant de 1 à 4,
avec un sulfure anhydre de formule générale
Me₂S (II),
dans laquelle Me représente un métal Alcalin, en particulier le sodium ou un équivalent d'un atome de métal Alcaline-terreux, ou de zinc, ou d'ammonium, et un composé d'organo-silicium de formule générale
Z-Alc-Y (II),
dans laquelle Z et Alc ont les significations indiquées ci-dessus et Y représente Cl, Br,
où l'on règle les rapports molaires des réactifs tétrasulfanes, Me₂S et composés selon la formule (III) est choisi entre 1 :1,8 à 2,2 :2,5 à 3,5, et l'on obtient le disulfane désulfuré.
